# FASCICULE DE BREVET EUROPEEN

(11) **EP 2 524 177 B1**
(45) Date de publication et mention de la délivrance du brevet: **17.07.2019**
(21) Numéro de dépôt: 11704280.4
(22) Date de dépôt: 12.01.2011
(51) Int. Cl.: F24S 80/70, F24S 25/35, F24S 25/37, F24S 25/65, F24S 40/44

(54) **DISPOSITIF DE FIXATION DE PANNEAUX SOLAIRES, ET PROCÉDÉ DE MONTAGE DE PANNEAUX SOLAIRES**
VORRICHTUNG ZUR BEFESTIGUNG VON SONNENKOLLEKTOREN UND VERFAHREN ZUR INSTALLATION VON SONNENKOLLEKTOREN
DEVICE FOR ATTACHING SOLAR PANELS AND METHOD FOR INSTALLING SOLAR PANELS

(30) Priorité: 12.01.2010 FR 1000103
(43) Date de publication de la demande: 21.11.2012
(73) Titulaire: JMA Sol, 29510 Briec (FR)
(72) Inventeur: TRELLU, Jacques, F-29150 Cast (FR)
(74) Mandataire: Ipside
(86) Numéro de dépôt international: PCT/FR2011/050055
(87) Numéro de publication internationale: WO 2011/086325

(56) Documents cités:
- EP-A1- 2 023 402
- EP-A1- 2 295 893
- EP-A2- 0 905 795
- EP-A2- 0 960 990
- WO-A1-2006/086808
- DE-A1-102004 026 786
- DE-A1-102005 039 495
- FR-A1- 2 401 290
- FR-A1- 2 546 552
- FR-A1- 2 924 729
- JP-A- 10 183 899
- JP-A- 11 117 479
- JP-A- 11 280 224
- JP-A- 2002 004 526
- JP-A- 2003 343 057
- NL-C2- 1 006 490
- US-A- 4 114 595

## Description

La présente invention se rapporte aux dispositifs de fixation de panneaux solaires, du type panneaux photovoltaïques, destinés à former partiellement ou totalement une toiture d'un bâtiment et à assurer l'étanchéité au niveau du plan de la toiture sans rajout inférieur d'un élément supplémentaire. Cette forme de montage du module photovoltaïque permet une production énergétique très supérieure aux montages traditionnels en surimposition des toitures existantes. L'ensemble des composants sont réalisés en usine aux dimensions exactes de la toiture, il n'y a donc aucune coupe à réaliser sur les chantiers.

Plus particulièrement, elle concerne un dispositif de fixation de panneaux photovoltaïques sur une charpente de toiture définissant un plan de toiture, la charpente comportant au moins deux pannes, le dispositif de fixation comportant au moins deux rails longitudinaux parallèles comprenant une extrémité inférieure et une extrémité supérieure et au moins un rail transversal s'étendant perpendiculairement entre deux rails longitudinaux, le panneau solaire étant destiné à être mis en place entre les rails.

Il existe dans l'état de la technique, différents dispositifs de fixation de panneaux solaires.

Notamment le document FR 2 924 141 décrit un dispositif de support d'un panneau solaire pour toiture, comportant un rail longitudinal sur lequel deux panneaux solaires viennent en appui. Ce document porte particulièrement sur une solution permettant d'assurer l'étanchéité de la toiture, mais ne divulgue aucune solution pour réaliser un montage facile, simple et rapide des panneaux solaires.

Le document FR 2 926 312 décrit un dispositif pour installer un ensemble de panneaux solaires sur une charpente. Les panneaux sont pris en sandwich entre un profilé socle et un profilé de recouvrement, l'ensemble formant une entretoise transversale. Grâce à ces dispositions, le dispositif peut accueillir des panneaux d'épaisseurs différentes. Toutefois, il présente l'inconvénient d'être long et fastidieux à mettre en oeuvre pour l'opérateur, car cela nécessite les étapes préalables de positionnement et serrage du panneau solaire dans l'entretoise.

Le document US 4 114 595 décrit un dispositif afin de collecter l'énergie solaire et un système d'encadrement approprié à l'aménagement des panneaux solaires, comportant au moins deux rails longitudinaux parallèles, s'étendant entre une extrémité inférieure et une extrémité supérieure, au moins un rail transversal s'étendant perpendiculairement entre deux rails longitudinaux, un moyen de solidarisation pour bloquer le panneau solaire selon la direction transversale et selon une direction perpendiculaire, des moyens d'étanchéité disposés entre la surface du moyen de solidarisation et la surface du rail longitudinal, et/ou entre la surface du moyen de solidarisation et la surface du rail transversal.

Le but de la présente invention est de pallier à ces inconvénients et de proposer un dispositif de fixation permettant l'intégration en couverture complète ou partielle de panneaux solaires incorporés en toiture, offrant une simplicité de conception et de mise en oeuvre, peu onéreux, et adapté aux contraintes climatiques.
A cet effet le dispositif adapté pour la fixation de panneaux solaires sur une charpente de toiture définissant un plan de la toiture, comporte, selon l'invention :
- au moins deux rails longitudinaux parallèles comprenant chacun une extrémité inférieure et une extrémité supérieure, chaque rail longitudinal comportant au moins une aile d'appui, présentant une face supérieure, sensiblement parallèle au plan de la toiture et adaptée pour recevoir en appui un bord longitudinal d'un panneau solaire, chaque rail longitudinal comportant également une aile de support disposée en dessous du premier plan d'appui et dont une face supérieure définit un plan de support, chaque rail longitudinal comprenant également un flanc s'étendant le long du rail longitudinal dans un plan perpendiculaire à l'aile d'appui du rail longitudinal et au-delà de l'aile d'appui du rail longitudinal, le flanc du rail longitudinal étant adapté pour limiter un panneau en déplacement selon la direction transversale,
- au moins un rail transversal s'étendant entre deux rails longitudinaux et perpendiculairement auxdits rails longitudinaux, le rail transversal présentant au moins une aile d'appui comportant une face supérieure adaptée pour recevoir en appui un bord transversal d'un panneau solaire, et une face inférieure comprenant deux extrémités, chaque extrémité de la face inférieure de l'aile d'appui du rail transversal étant adaptée pour venir en appui sur la face supérieure de l'aile de support d'un rail longitudinal, le rail transversal comprenant également un flanc s'étendant le long du rail transversal dans un plan perpendiculaire à l'aile d'appui du rail transversal et au delà de l'aile d'appui du rail transversal, le flanc du rail transversal étant adapté pour limiter un panneau en déplacement selon la direction longitudinale,
- un moyen de solidarisation adapté pour coopérer avec le flanc d'un rail longitudinal pour bloquer le panneau selon la direction transversale et selon une direction perpendiculaire à un plan principal du panneau et/ou pour coopérer avec le flanc du rail transversal pour bloquer le panneau dans la direction longitudinal et dans la direction perpendiculaire au plan principal du panneau
- un moyen d'étanchéité disposé entre le moyen de solidarisation et les faces supérieures des panneaux solaires, ledit moyen d'étanchéité étant un joint d'étanchéité pour chaque rail longitudinal et pour chaque rail transversal, chaque joint d'étanchéité étant déformable en section entre une position initiale sensiblement plane et une position d'utilisation dans laquelle il présente une forme sensiblement en U, avec des bords supérieurs venant en contact avec les faces supérieures de deux panneaux adjacents, les bords supérieurs comportant un ajout de matière, le joint d'étanchéité étant réalisé avec un enlèvement de matière en dessous de l'extrémité basse du pliage en forme de U.

Grâce à ces dispositions, le montage de panneaux est réalisé par des étapes simples d'assemblage de rails et de panneaux, les rails s'emboîtant les uns dans les autres. Il n'est notamment pas nécessaire pour l'opérateur de maintenir le panneau solaire lors de l'étape d'assemblage. Par ailleurs, le dispositif assure une liaison fiable entre les éléments après assemblage. Enfin, le moyen d'étanchéité garantit l'étanchéité du dispositif et de la toiture.

Selon une caractéristique avantageuse de l'invention :
- chaque extrémité de la face inférieure de l'aile d'appui du rail transversal est adaptée pour venir en appui sur la face supérieure de l'aile de support d'un rail longitudinal lorsque le dispositif est dans une position de montage dans laquelle les rails et les panneaux sont mis en place et
- la face supérieure de l'aile d'appui du rail transversal est adaptée pour recevoir en appui un bord transversal d'un panneau solaire, lorsque le dispositif est dans une position montée dans laquelle les rails et les panneaux sont fixés solidairement entre eux.

Ainsi, le rail transversal est mobile entre la position de montage et la position montée, ce qui facilite la mise en place du rail transversal, comme on le verra mieux par la suite. Egalement, en position montée, les faces supérieures des ailes d'appui des rails longitudinaux et transversaux sont toutes dans le même plan et forment ainsi une surface d'appui pour le panneau.

Selon une caractéristique avantageuse de la présente invention, le moyen de solidarisation comprend une parclose pour chaque rail longitudinal et chaque rail transversal, chaque parclose présentant sensiblement une section en forme de T, deux ailes du T étant adaptées pour venir en contact avec une face supérieure de deux panneaux adjacents et une partie inférieure du T étant adaptée pour être vissée au rail longitudinal ou transversal. Ainsi, le moyen de solidarisation maintient le moyen d'étanchéité entre les rails et le panneau, et maintient le moyen de solidarisation et le panneau solidaire.

Le rail longitudinal comprend de préférence deux flancs longitudinaux symétriques par rapport à un plan de symétrie parallèle aux deux flancs et s'étendant entre les deux flancs, deux ailes d'appui symétriques par rapport au plan de symétrie du rail longitudinal, et deux ailes de support symétriques par rapport au plan de symétrie du rail longitudinal.

Le rail transversal comprend de préférence deux flancs symétriques l'un de l'autre par rapport à un plan de symétrie parallèle aux deux flancs et s'étendant entre les deux flancs, et deux ailes d'appui symétriques par rapport au plan de symétrie du rail transversal.

La symétrie des rails facilite le montage de plusieurs panneaux côte à côte. La symétrie des rails facilite également la conception et la réalisation des rails dans la mesure où un seul modèle de rail longitudinal et un seul modèle de rail transversal permettent le montage de un ou plusieurs panneaux, selon des configurations variées.

Selon une autre caractéristique de la présente invention, le moyen de d'étanchéité comprend un joint d'étanchéité pour chaque rail longitudinal et pour chaque rail transversal, chaque joint étant déformable en section entre une position initiale sensiblement plane et une position d'utilisation dans laquelle il présente une forme sensiblement en U, avec des bords supérieurs venant en contact avec les faces supérieures de deux panneaux adjacents.

Ainsi, le joint d'étanchéité, en forme de U en position d'utilisation, s'adapte à l'espace entre les panneaux et les rails de manière à rester en position avant le serrage dudit joint d'étanchéité ; ceci facilite le travail de l'opérateur de montage. D'autre part, les bords supérieurs permettent d'assurer l'étanchéité une fois que le joint d'étanchéité est serré par les moyens de solidarisation. De plus, les mêmes joints d'étanchéité sont utilisés sur les rails longitudinaux et sur le rail transversal, ainsi la forme du joint d'étanchéité est unique pour tout le dispositif.

Enfin, comme les joints ont une forme sensiblement plane en position initiale, ils peuvent être livrés sous la forme d'un ruban en bobine que l'opérateur découpe en fonction de la dimension des panneaux et des rails.

Selon une autre caractéristique avantageuse de la présente invention, les flancs du rail longitudinal définissent entre eux une gorge de vissage, et les flancs du rail transversal définissent entre eux une gorge de vissage, et lesdites gorges de vissage sont adaptées pour recevoir une vis adaptée pour fixer les moyens de solidarisation au rail longitudinal ou au transversal. La gorge de vissage permet de loger la vis et de fixer les moyens de solidarisation aux rails.

Les moyens de solidarisation peuvent également présenter une partie de guidage permettant de centrer la vis en direction de la gorge de vissage d'un rail. Ceci évite que la vis s'insère de travers.

Les moyens de solidarisation peuvent encore présenter une cavité fraisée dans laquelle la tête de vis est insérée. La cavité fraisée permet de recevoir la tête de vis.

Selon un autre mode de réalisation de l'invention, le dispositif peut comprendre une barre de gouttière adaptée pour être fixée sur un bord inférieur d'un panneau solaire et adaptée pour être fixée par vissage à l'extrémité du rail longitudinal.

La barre de gouttière assure un blocage d'un panneau solaire et empêche ainsi la chute du panneau solaire lors de la phase de montage De cette façon, il n'est pas nécessaire d'avoir un deuxième rail transversal selon ce mode de réalisation préféré, la réalisation d'un rail transversal étant plus complexe que la réalisation d'une gouttière.

Selon une autre caractéristique avantageuse de la présente invention, deux rails longitudinaux consécutifs sont reliés entre eux au moyen d'une éclisse sur laquelle ils sont susceptibles d'être vissés. L'éclisse permet de maintenir deux rails longitudinaux afin que ces deux rails correspondent à la structure souhaitée. Ainsi, l'opérateur du dispositif peut manipuler plusieurs rails longitudinaux de longueur limitée plutôt qu'un seul rail longitudinal de grande longueur, difficile à manipuler à cause de son poids et de sa taille.

L'éclisse est de préférence adaptée aux rails longitudinaux et il existe un jeu minimum entre l'éclisse et deux rails longitudinaux. Dans ces conditions, l'éclisse est solidaire des rails et l'ensemble est étanche. Ainsi, lors du serrage de la vis à tête fraisée, un couple très important vient contraindre les deux rails longitudinaux entre eux et ainsi obtenir une continuité parfaite de l'étanchéité tout le long de l'assemblage et ceci sans joint additionnel facilitant grandement l'assemblage en toiture.

Sous l'effet de la dilatation thermique, les deux rails se déforment et pourraient créer un jeu important entre l'éclisse et les rails longitudinaux, c'est pourquoi l'éclisse est de préférence fixée aux rails longitudinaux. Pour cela, le rail longitudinal peut être muni de renforts adaptés pour recevoir une vis qui maintient en position l'éclisse aux rails longitudinaux.

Selon une autre caractéristique avantageuse de la présente invention, la somme de la distance entre le perçage et l'extrémité du premier rail longitudinal et la distance entre le perçage et l'extrémité du deuxième rail longitudinal est supérieure à la distance de l'entraxe de deux perçages de l'éclisse destinée à recevoir la vis.

Selon une autre caractéristique avantageuse de la présente invention, une patte de renfort est fixée sous la face du dessous d'un rail transversal, ladite patte de renfort étant adaptée pour coopérer avec une face inférieure de l'aile de support d'un rail longitudinal. Ainsi, les pattes de renfort permettent d'assurer le maintien du dispositif lors, par exemple, de vent cyclonique dû aux phénomènes de dépression.

Selon une autre caractéristique avantageuse de la présente invention, les rails longitudinaux sont fixés solidairement à la charpente, sensiblement au milieu du rail longitudinal, et sont maintenus entre le point de fixation solidaire et les extrémités par des crochets de fixation permettant la déformation du rail selon la direction longitudinale due aux variations de température.

Ainsi, les crochets de fixation fixés solidairement à la toiture sont adaptés pour bloquer le rail dans le sens longitudinal. Les crochets qui sont entre le point de fixation solidaire et les extrémités sont glissants par leur conception et permettent au rail un mouvement longitudinal en allongement lors des phases de dilatation et en rétraction lors des phases de contraction. Le dispositif permet donc de s'affranchir des problèmes de dilatation qui résultent des écarts importants de température en toiture entre l'hiver et l'été, cet écart étant prévu pour une variation de 90 ° soit de -20 ° Celsius à + 70 °. Cette caractéristique permet une installation sur des charpentes pouvant dépasser 50 m sans problème.

Selon une autre caractéristique avantageuse de la présente invention, un rail, l'aile d'appui d'un rail et / ou l'aile de support d'un rail définissent des gouttières d'écoulement de l'eau, qui permettent de canaliser l'eau vers le bas de la toiture.

D'autre part, la présente invention concerne un procédé de montage d'un dispositif selon la présente invention, dispositif adapté pour la fixation de panneaux solaires sur une charpente d'une toiture définissant un plan de toiture, le procédé étant caractérisé en ce qu'il comprend les étapes de :
(a) fixation des rails longitudinaux sur la charpente,
(b) positionnement d'un panneau solaire,
(c) mise en place du rail transversal au-dessous du panneau solaire, et mise en appui du panneau sur la face supérieure de l'aile d'appui de chaque rail longitudinal et sur la face supérieure de l'aile d'appui du rail longitudinal,
   les étapes (b) et (c) étant répétées pour chaque panneau solaire,
(d) mise en place des joints d'étanchéité sur chaque rail longitudinal et chaque rail transversal,
(e) mise en place des moyens de solidarisation,
(f) fixation des moyens de solidarisation sur les rails longitudinaux et transversaux.

Le procédé permet de positionner de manière simple et aisée pour l'opérateur les panneaux solaires.

La présente invention sera mieux comprise à la lecture de la description détaillée qui suit selon des modes préférés de réalisation de l'invention. La description est réalisée sur la base des dessins annexés dans lesquels :
- la figure 1 représente une vue en perspective éclatée de deux panneaux solaires d'une même rangée et du dispositif de fixation associé,
- Les figures 2 et 3 représentent respectivement une vue en coupe transversale d'un rail longitudinal et une vue en coupe longitudinale d'un rail transversal,
- La figure 4 représente une vue en perspective d'un moyen de solidarisation,
- Les figures 5 et 6 représentent une vue en perspective et une vue en coupe transversale d'un rail longitudinal équipé d'une patte de renfort,
- Les figures 7 et 8 représentent la toiture respectivement en cours de montage et totalement montée,
- Les figures 9 et 10 représentent des vues de détail de l'extrémité d'un rail transversal et du moyen de solidarisation associé,
- La figure 11 représente une vue en perspective éclatée de deux rails longitudinaux consécutifs,
- La figure 12 représente une vue de détail du rail longitudinal,
- Les figures 13a, 13b, 13c, 13d représentent des vues en perspective et des vues en coupe d'un panneau solaire de la rangée inférieure d'une toiture, équipé d'une gouttière d'extrémité,
- Les figures 14a et 14b représentent deux vues en coupe illustrant le rail transversal par rapport au rail longitudinal respectivement avant et après serrage des moyens de solidarisation,
- Les figures 15a et 15b illustrent l'écoulement de l'eau dans le rail transversal et le rail longitudinal,
- La figure 16 représente une vue en perspective d'un joint d'étanchéité 40,
- La figure 17 représente une vue en perspective du joint d'étanchéité 40 en position de montage entre de panneau solaire 12.

Dans la description qui suit, les termes « haut, bas, inférieur, supérieur, vertical, horizontal » seront compris selon leur sens conventionnel dans un bâtiment.

La présente invention concerne un dispositif de fixation 10 permettant d'intégrer, dans la toiture, des panneaux solaires 12, qui vont constituer partiellement ou en totalité la couverture du toit assurant l'étanchéité. Le dispositif de fixation permet d'intégrer des panneaux solaires 12 cadrés ou non cadrés, dans lesquels, le module solaire constitue l'élément principal d'étanchéité du système. Ce type de couverture de toit trouve un avantage particulier dans les bâtiments industriels ou agricoles, qui présentent une grande surface qui peut être valorisée en y insérant des dispositifs collecteurs d'énergie.

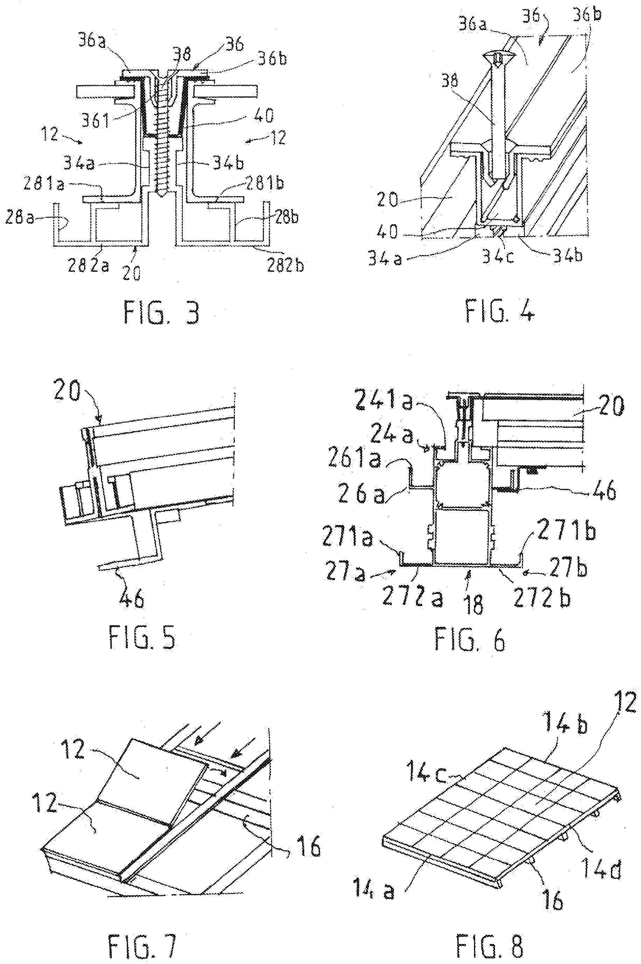

Le dispositif de fixation 10 selon l'invention est utilisé de préférence pour des toitures présentant une pente comprise entre 5° et 45° par rapport à la direction horizontale. Chaque toiture comporte au moins un pan s'étendant entre une extrémité inférieure 14a et une extrémité supérieure 14b définissant entre elles la direction longitudinale et entre deux extrémités latérales 14c, 14d définissant entre elles la direction transversale. La figure 8 illustre un pan de toiture dont les éléments de recouvrement sont constitués par des panneaux solaires 12, disposés en rangées parallèlement à la direction transversale.

Le panneau solaire 12 est par exemple un panneau photovoltaïque constitué de capteurs ou cellules photovoltaïques qui sont reliées entre elles pour créer un réseau. Les panneaux solaires photovoltaïques permettent de capter le rayonnement du soleil, qui est alors transformé en électricité distribuée au bâtiment ou injectée dans un réseau de distribution d'électricité.

Chaque panneau solaire se présente sous la forme d'une plaque rectangulaire éventuellement entourée par un cadre.

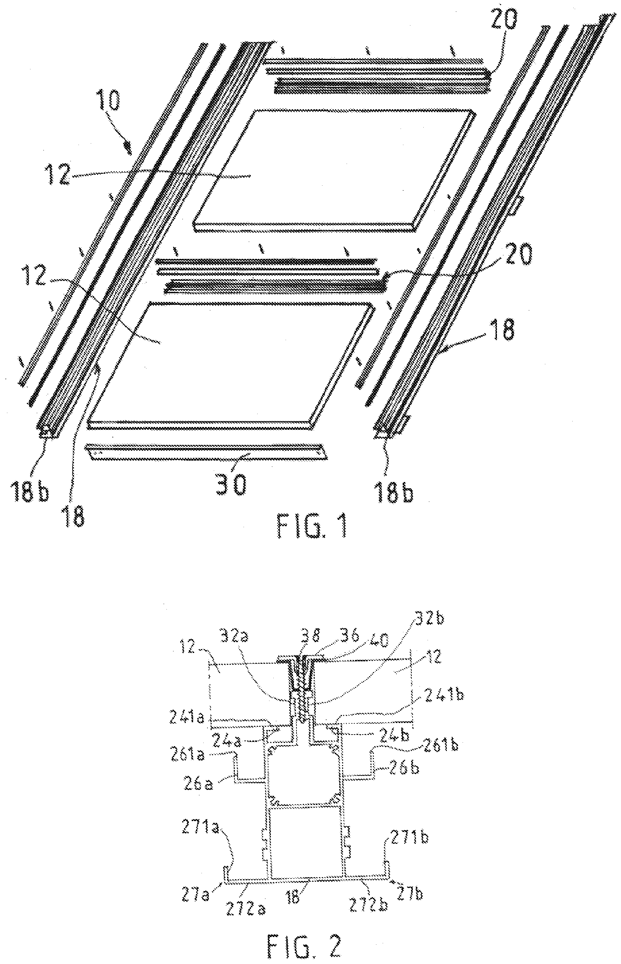

Chaque panneau est relié à la charpente 16 de la toiture, visible sur les figures 7, 8 et 12 au moyen du dispositif de fixation 10 comportant des rails longitudinaux et transversaux, tel que visible sur la figure 1. Les rails sont des profilés usinés en alliage d'aluminium. Dans les exemples représentés, chaque rail est conformé symétriquement selon un plan médian, de sorte à pouvoir réceptionner de part et d'autre du rail deux panneaux solaires 12 successifs.

Chaque rail longitudinal 18 est fixé solidairement à la charpente 16, sensiblement au milieu du rail 18 et est maintenu entre le point de fixation solidaire et les extrémités supérieures 18a et inférieures 18b par des crochets de fixation 22 permettant sa déformation selon un mouvement longitudinal en allongement lors des phases de dilatation et en rétraction lors des phases de contraction.

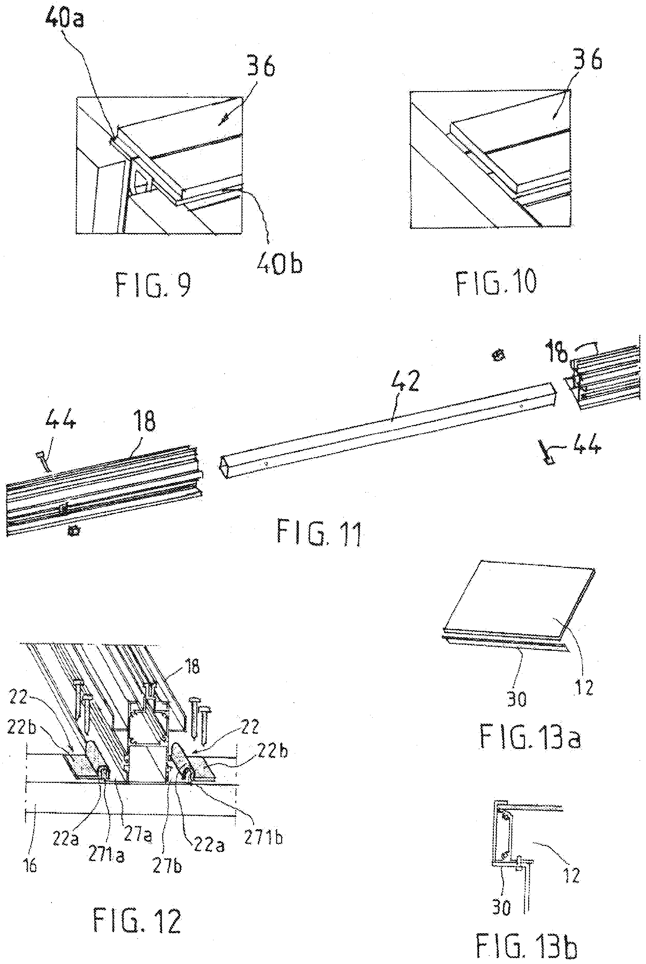

Ces crochets 22, visibles sur la figure 12, présentent une forme en U inversé 22a à l'intérieur duquel le rail longitudinal 18 peut coulisser et une patte 22b de fixation fixée par vissage à la charpente 16. Le rail longitudinal 18 est fixé solidairement à la charpente 16 par l'intermédiaire des crochets de fixation 22 soit solidaire au centre du rail ou glissants de part et d'autre vers les extrémités du rail longitudinal. Les crochets de fixation 22 permettent au rail longitudinal 18 de s'allonger ou de se rétracter en fonction de la dilatation provenant des variations de température très importantes en toiture entre l'été et l'hiver de même qu'entre le jour et la nuit. L'allongement pourra s'exercer soit vers le haut du toit 14 b soit vers le bas 14a.

Un exemple de rail longitudinal 18 est illustré, en section, sur la figure 2. Il comporte, de chaque côté, disposées symétriquement par rapport au plan médian, deux ailes d'appui 24a, 24b qui s'étendent parallèlement au plan de la toiture et qui présentent chacune une face supérieure 241a, 241b définissant un premier plan d'appui, adapté à recevoir le panneau solaire 12. Le rail longitudinal 18 comporte en outre, disposées symétriquement par rapport au plan médian, deux ailes de support 26a, 26b disposées en dessous des ailes d'appui 24a, 24b et dont la face supérieure 261a, 261b définit un plan de support parallèle au premier plan d'appui. Il comporte en outre des ailes 27a, 27b de fixation présentant une partie sensiblement horizontale 271a, 271b et une partie sensiblement verticale 272a, 272b qui coulisse dans les crochets de fixations 22.

Dans un autre exemple, non représenté, un rail longitudinal ne comprend pas de plan de symétrie et comprend seulement une aile d'appui, une aile de support et une aile de fixation. Un tel rail peut par exemple être utilisé en bordure de toiture.

Un exemple de rail transversal 20, visible en section à la figure 3, comporte, disposées symétriquement par rapport à un plan médian, deux ailes d'appui 28a, 28b présentant une face supérieure 281a, 281b et une face inférieure 282a, 282b. Lors du montage, une extrémité de la face inférieure 282a, 282b d'une aile d'appui du rail transversal 20 vient en contact sur la face supérieure 261a, 261b d'une aile de support 26a, 26b d'un rail longitudinal 18.

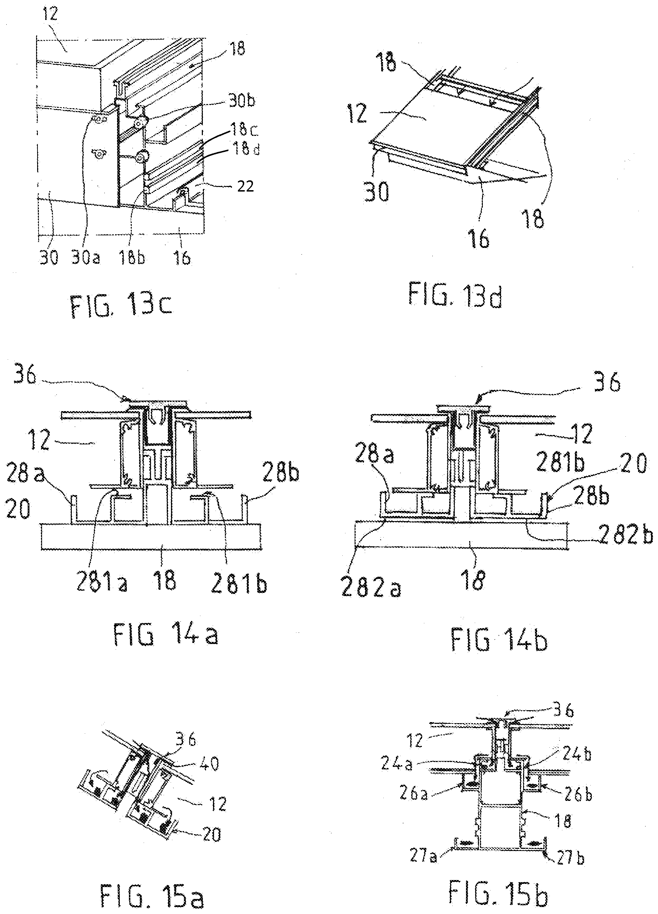

De préférence en position de montage, c'est-à-dire lorsque les rails et les panneaux solaires sont mis en place, mais non fixés entre eux, les niveaux des faces supérieures 281a et 281b des ailes d'appui des rails transversaux sont inférieurs d'environ 2mm aux niveaux des faces supérieures 241a et 241b des ailes d'appui des rails longitudinaux dans le but de pouvoir glisser les rails transversaux 20 sous les panneaux solaires 12, comme illustré sur la figure 14a. En position de montage, les panneaux 12 sont en appui sur les faces supérieures 241a, 241b des ailes d'appui des rails longitudinaux et les mouvements des panneaux selon la direction longitudinale et transversale sont limités respectivement par les rails transversaux 20 et longitudinaux 18, qui délimitent un cadre annulaire. Il est ainsi possible de réaliser une première étape d'assemblage d'un ensemble de panneaux solaires 12 par un montage simple réalisé par enchainement de panneaux solaires 12 et de rails transversaux 20.

En position montée, après vissage, les faces 281a et 281b sont au niveau des faces 241a et 241b, et le panneau solaire 12 est enserré entre les rails, comme visible sur la figure 14b. Les rails transversaux 20 et les rails longitudinaux 18 sont conformés de sorte à réaliser une surface de réception ou d'appui d'un panneau solaire 12. La surface d'appui est formée par les surfaces supérieures 241a, 241b, 281a, 281b des ailes d'appui 24a, 24b, 28a, 28b lorsque le dispositif de fixation est en position montée. En position montée, les rails transversaux se trouvent ainsi décollés des supports du rail longitudinal ce qui permet à l'ensemble de se dilater sans contrainte de même que de créer un plan pour le panneau 12 sans que ce dernier soit contraint lors de la phase de vissage des éléments 36.

Afin de bloquer la rangée inférieure de panneaux solaires 12, le dispositif de fixation 10 de panneaux solaires 12 comporte, dans l'exemple représenté, une barre de gouttière 30, visible sur les figures 1, 13a et 13b, fixée sur le bord inférieur des panneaux 12 de ladite rangée inférieure. La barre de gouttière 30 est fixée par vissage à l'extrémité inférieure 18b du rail longitudinal 18. La barre de gouttière 30 assure un blocage de la rangée inférieure de panneau solaire 12, empêchant ainsi la chute des panneaux solaires de la rangée inférieure lors de la phase de montage du premier panneau solaire 12.

Dans les exemples représentés encore, chaque rail longitudinal 18 présente deux flancs centraux 32a, 32b visibles sur la figure 2 et chaque rail transversal 20 présente deux flancs centraux 34a, 34b, visibles sur la figure 3, symétriques l'un par rapport à l'autre. Pour chaque rail, les deux flancs centraux définissent entre eux une gorge de vissage 32c, 34c. Les flancs 32a, 32b, 34a, 34b s'étendent verticalement au-delà des ailes d'appui 24a, 24b, 28a, 28b, et permettent de limiter le déplacement du panneau solaire 12 lors de l'étape d'assemblage.

Tel qu'illustré sur les figures 1, 2, 4, 9 et 10, le dispositif de fixation 10 selon l'invention comporte en outre un moyen de solidarisation 36 qui coopère avec les flancs 32a, 32b, 34a, 34b de sorte à bloquer les panneaux 12 de tout mouvement selon l'une des directions verticale, transversale ou horizontale. Les moyens de solidarisation 36 sont formés par des parcloses fixées aux rails longitudinaux 18 et transversaux 20 par vissage. A cet effet, une vis 38 traverse la parclose 36 et vient coopérer avec un filetage de la gorge de vissage 32c, 34c des rails longitudinaux 18 et des rails transversaux 20 et. Chaque parclose dispose d'une cavité fraisée dans laquelle la tête de la vis 38 s'insère de sorte à ne pas apparaître au-dessus de la parclose 36 en toiture avec des effets néfastes pour l'esthétique de l'ensemble. Le vissage par vis à tête fraisée conique permet également un meilleur couple de serrage pérenne dans le temps. L'étanchéité entre la vis 38 et la parclose 36 est réalisée par une pression au serrage métal métal ce qui évite la mise en oeuvre de joints et simplifie grandement l'installation.

Chaque parclose 36 présente sensiblement une forme en T avec deux pattes 36a, 36b venant au contact avec la surface supérieure des deux panneaux 12 solaires adjacents.

Selon un mode de réalisation préféré, la parclose 36 comporte une partie de guidage 361 permettant de centrer la vis en direction du logement défini entre les flancs. La partie de guidage est formée par deux ailes asymétriques 361a, 361b qui sont décalées dans le sens du vissage d'un pas de vis dans le but de guider parfaitement la vis 38 lors du serrage.

Le dispositif selon l'invention comprend également un moyen d'étanchéité. Dans les exemples représentés, le moyen d'étanchéité comprend des joints d'étanchéité 40, chaque joint d'étanchéité 40 étant disposé entre une parclose 36 et les flancs 32a, 32b ou 34a, 34b du rail longitudinal ou transversal. Le joint 40 est déformable entre une position initiale sensiblement plane, dans laquelle il peut être enroulé et déroulé facilitant ainsi son transport, et une position d'utilisation dans laquelle il présente une forme sensiblement en U avec des bords supérieurs 40a, 40b venant au contact des faces supérieures des deux panneaux 12 adjacents au rail 18, 20 sur lequel est posé le joint 40. Le joint d'étanchéité 40 est amené en position d'utilisation lors de la mise en place de la parclose 36 et de la vis 38 associée. La forme plane du joint 40 permet lors de son pliage en forme de U de maintenir une pression latérale contre les deux panneaux solaires 12 et ainsi de permettre le positionnement des parcloses 36 sans aucune difficulté.

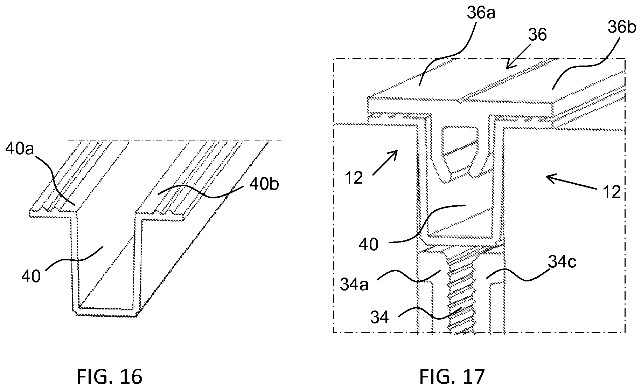

Selon une caractéristique de l'invention illustrée à la figure 16, le joint d'étanchéité 40 est réalisé avec un enlèvement de matière en dessous de l'extrémité basse du pliage en forme de U de sorte à maintenir et assurer contre les deux panneaux solaires 12 une pression latérale constante dû à la forme en U.

Sur les bords supérieurs 40a et 40b il y a un ajout de matière qui permet à cet endroit d'être en compression lors de la fixation de la parclose 36 et ainsi d'assurer l'étanchéité.

La forme en U du joint d'étanchéité 40 est illustrée à la figure 17 de manière à faciliter le montage, les ajouts de matière sont positionnés au dessus des bords supérieurs 40a et 40b afin de ne pas gêner l'opérateur au moment du positionnement du joint 40 avec les arêtes supérieures des panneaux solaires 12 et ainsi de faciliter le montage de l'ensemble du dispositif.

Certains pans de toits présentent une longueur supérieure à celle du rail et nécessitent donc la pose de plusieurs rails longitudinaux 18 successifs. Aussi, selon une variante de l'invention, la liaison entre deux rails longitudinaux 18 successifs est assurée au moyen d'une éclisse 42 fig 11. L'éclisse 42 est constituée d'un tube carré percé de chaque côté et l'éclisse est insérée dans les rails longitudinaux 18 qui possèdent une réservation calibrée à cet effet. L'éclisse est fixée à chaque rail longitudinal 18 entre les deux renforts 18c et 18d avec une vis 44 à tête fraisée et présentant à l'autre extrémité une réservation carrée, permettant de le bloquer en rotation en coopération avec une fente usinée dans le rail. Les deux renforts 18c et 18d illustrés à la figure 13c permettent de ne pas déformer le rail longitudinal 18 lors du serrage de la vis 44.

Pour que les rails longitudinaux 18 restent en contrainte l'un contre l'autre, il est réalisé un désaxage entre les perçages du rail longitudinal et les perçages de l'éclisse 42. En effet, afin d'avoir un serrage des deux rails longitudinaux 18 consécutifs, il faut tenir compte des tolérances d'usinage, et la distance entre les deux perçages d'une éclisse 42 associant un premier et un deuxième rail doit être inférieure à somme de la distance entre le perçage et l'extrémité du premier rail longitudinal et la distance entre le perçage et l'extrémité du deuxième rail longitudinal, le premier rail longitudinal et le deuxième rail longitudinal étant associés par l'intermédiaire de l'éclisse.

La distance entre deux perçages d'une éclisse 42 est déterminée en fonction du serrage souhaité et de la déformation des rails longitudinal 18. Dans un mode de réalisation préféré, la distance mesurée entre les deux perçages d'un rail longitudinal 18 est d'environ 600 mm et la distance entre deux perçages d'une éclisse 42 est d'environ 597,5 mm. De cette manière, l'éclisse 42 est forcée à maintenir sa position sans jeu dans le rail longitudinal 18 de manière à garantir l'étanchéité et d'assurer la bonne tenue de la structure.

La présente invention concerne aussi un procédé de montage de panneaux solaires 12 sur une charpente 16 d'une toiture définissant un plan incliné. Le procédé consiste tout d'abord à fixer les rails longitudinaux 18 sur la charpente 16. Comme indiqué précédemment les rails longitudinaux 18 sont fixés solidairement à la charpente sensiblement au milieu dudit rail 18. Chaque rail longitudinal 18 est ancré sur la charpente par des crochets de fixation 22 permettant la déformation du rail due aux changements de température. Les rails longitudinaux 18 sont disposés selon un écartement régulier correspondant à la largeur des panneaux solaires 12, ou éventuellement leur longueur lorsqu'ils sont dans une autre disposition. De plus, l'écartement doit prendre en compte le jeu nécessaire entre les rails longitudinaux 18 et les panneaux solaires 12, pour permettre leur dilatation. Ce jeu sera calculé préalablement par des moyens connus de l'homme du métier.

La rangée inférieure de panneaux 12 est alors mise en place avec la barre de gouttière 30 qui a été préalablement fixée sur le bord inférieur du panneau 12. Puis le panneau solaire 12 est mis en place entre deux rails longitudinaux 18 et la barre de gouttière 30 est vissée dans l'extrémité inférieure 18b du rail longitudinal 18. A cet effet, des trous oblongs 30a seront réalisés dans la barre de gouttière 30 afin de pouvoir ajuster celle-ci par rapport au rail longitudinal 18.

La barre de gouttière 30 est espacée de l'extrémité inférieure 18b du rail longitudinal 18, par l'intermédiaire d'une rondelle 30b formant une entretoise, permettant l'écoulement de l'eau drainée dans les rails.

Un premier rail transversal 20 est disposé entre les rails longitudinaux 18 sous le bord supérieur du panneau solaire 12 du côté opposé à la barre de gouttière 30. Comme décrit précédemment, le rail transversal 20 forme avec le rail longitudinal 18 un cadre sur lequel le panneau solaire vient partiellement en appui.

Le premier rail transversal étant posé, il suffit à l'opérateur de réaliser le montage, c'est-à-dire d'assembler les panneaux 12 et les rails transversaux en les enchaînant alternativement jusqu'à atteindre l'extrémité supérieure du rail longitudinal 18.

L'ensemble des étapes énoncées ci-dessus sont répétées jusqu'à former la toiture visible sur la figure 8.

L'opérateur déroule et dispose les joints 40 entre les panneaux solaires 12 selon la direction longitudinale. Il sera découpé à la longueur déterminée, c'est-à-dire à la longueur du rail longitudinal 18. L'opérateur met en place le moyen de solidarisation formé par la parclose 36, par un simple mouvement d'emboîtement entre deux panneaux 12 d'une même rangée. Puis l'opérateur effectue l'opération de fixation en insérant les vis 38 et en effectuant le vissage de sorte à fixer la parclose 36 au rail longitudinal 18. Le positionnement de la vis 38 est guidé lors de l'étape de vissage par les ailes asymétriques 361a, 361b de la parclose 36.

Puis l'opérateur effectue les mêmes étapes pour positionner le joint 40 et la parclose 36 selon la direction transversale. Dans ce cas, le joint 40 est découpé préalablement à la longueur du rail transversal 20. Les extrémités des joints et des parcloses transversales 36 sont mis en contrainte contre les joints 40 des rails longitudinaux 18, de sorte à assurer l'étanchéité de la toiture lors des phases de serrage des vis 38. Après vissage, le dispositif de fixation est en position montée.

Selon une variante de réalisation de l'invention illustrée aux figures 5 et 6, une patte de renfort 46 est disposée entre les extrémités des rails transversaux 20 et le rail longitudinal 18 et permet d'assurer une meilleure tenue aux phénomènes de dépression. Cela est particulièrement utile pour la réalisation des toitures de parkings couverts qui ne possèdent pas de bardages latéraux.

Dans un mode de réalisation préféré, les vis 38 résistent à environ 900 KG à l'arrachement puisqu'il y en a environ 13 pour un panneau de 1,6 m² on aura 8 vis au m² soit une résistance à l'arrachement de 7200 Kg soit 72 000 N et donc 72 000 Pa par m².

Après vissage, le rail transversal se décolle des rails longitudinaux et il n'y a plus de contact entre les deux rails. Cette disposition résulte de la phase de montage décrite en amont et permet par la suite d'éviter tout contact usant entre les rails 20 et 18 lors des phases de dilatation et rétraction.

Un faitage est disposé au sommet du toit, selon des modes de réalisation connus de l'homme du métier.

La présente invention permet, grâce à la forme des rails, d'assurer l'écoulement de l'eau dû à une fuite ou à la condensation, selon les passages visibles aux figures 15a et 15b. L'eau coule dans les profilés des traverses puis est drainée vers les rails longitudinaux qui la canalise vers le bas.

L'invention n'est nullement limitée aux modes de réalisation décrits et détaillés qui n'ont été donnés qu'à titre d'exemple.

## Revendications

1. Dispositif adapté pour la fixation de panneaux solaires (12) sur une charpente (16) de toiture définissant un plan de la toiture, ledit dispositif comportant:
- au moins deux rails longitudinaux (18) parallèles comprenant chacun une extrémité inférieure (18b) et une extrémité supérieure (18a), chaque rail longitudinal (18) comportant au moins une aile d'appui (24a, 24b) présentant une face supérieure (241a, 241b) adaptée à être sensiblement parallèle au plan de la toiture et adaptée pour recevoir en appui un bord longitudinal d'un panneau solaire (12), chaque rail longitudinal comportant également une aile de support (26a, 26b) disposée en-dessous du premier plan d'appui et dont une face supérieure (261a, 261b) définit un plan de support, chaque rail longitudinal comprenant également deux flancs (32a, 32b) s'étendant le long du rail longitudinal dans un plan perpendiculaire à l'aile d'appui du rail longitudinal et au-delà de l'aile d'appui du rail longitudinal, le flanc du rail longitudinal étant adapté pour limiter un panneau en déplacement selon la direction transversale,
- au moins un rail transversal (20) s'étendant entre deux rails longitudinaux (18) et perpendiculairement auxdits rails longitudinaux, le rail transversal (20) présentant au moins une aile d'appui (28a, 28b) comportant une face supérieure (281a, 281b) adaptée pour recevoir en appui un bord transversal d'un panneau solaire, et une face inférieure (282a, 282b) comprenant deux extrémités, chaque extrémité de la face inférieure (282a, 282b) de l'aile d'appui du rail transversal étant adaptée pour venir en appui sur la face supérieure (261a, 261b) de l'aile de support (26a, 26b) d'un rail longitudinal (18), le rail transversal comprenant également deux flancs (34a, 34b) s'étendant le long du rail transversal dans un plan perpendiculaire à l'aile d'appui du rail transversal et au-delà de l'aile d'appui du rail transversal, les flancs du rail transversal étant adaptés pour limiter un panneau en déplacement selon la direction longitudinale,
- un moyen de solidarisation (36) adapté pour coopérer avec les flancs d'un rail longitudinal pour bloquer le panneau selon la direction transversale et selon une direction perpendiculaire à un plan principal du panneau et / ou pour coopérer avec les flancs du rail transversal pour bloquer le panneau dans la direction longitudinale et dans la direction perpendiculaire au plan principal du panneau
- un moyen d'étanchéité disposé entre le moyen de solidarisation (36) et les faces supérieures des panneaux solaires (12),
**caractérisé en ce que** ledit moyen d'étanchéité est un joint d'étanchéité (40) pour chaque rail longitudinal et pour chaque rail transversal, chaque joint d'étanchéité (40) étant déformable en section entre une position initiale sensiblement plane et une position d'utilisation dans laquelle il présente une forme sensiblement en U, avec des bords supérieurs (40a, 40b) venant en contact avec les faces supérieures de deux panneaux adjacents (12), les bords supérieurs (40a) et (40b) comportant un ajout de matière, le joint d'étanchéité (40) étant réalisé avec un enlèvement de matière en dessous de l'extrémité basse du pliage en forme de U.

2. Dispositif selon la revendication 1, dans lequel :
- chaque extrémité de la face inférieure (282a, 282b) de l'aile d'appui du rail transversal est adaptée pour venir en appui sur la face supérieure (261a, 261b) de l'aile de support (26a, 26b) d'un rail longitudinal (18) lorsque le dispositif est dans une position de montage dans laquelle les rails et les panneaux sont mis en place, et
- la face supérieure (281a, 281b) de l'aile d'appui du rail transversal est adaptée pour recevoir en appui un bord transversal d'un panneau solaire, lorsque le dispositif est dans une position montée dans laquelle les rails et les panneaux sont fixés solidairement entre eux.

3. Dispositif selon l'une des revendications précédentes dans lequel le moyen de solidarisation (36) comprend une parclose pour chaque rail longitudinal (18) et chaque rail transversal (20), chaque parclose présentant sensiblement une section en forme de T, deux ailes du T (36a, 36b) étant adaptée pour venir en contact avec une face supérieure de deux panneaux adjacents (12) et une partie inférieure du T étant adaptée pour être vissée au rail longitudinal ou transversal.

4. Dispositif selon l'une des revendications précédentes dans lequel le rail longitudinal comprend deux flancs longitudinaux (32a, 32b) symétriques l'un de l'autre par rapport à un plan de symétrie parallèle aux deux flancs et s'étendant entre les deux flancs (32a, 32b), deux ailes d'appui (24a, 24b) symétriques par rapport au plan de symétrie du rail longitudinal, et deux ailes de support (26a, 26b) symétriques par rapport au plan de symétrie du rail longitudinal.

5. Dispositif selon l'une des revendications précédentes dans lequel le rail transversal comprend deux flancs (34a, 34b) symétriques l'un de l'autre par rapport à un plan de symétrie parallèle aux deux flancs et s'étendant entre les deux flancs, et deux ailes d'appui (28a, 28b) symétriques par rapport au plan de symétrie du rail transversal.

6. Dispositif selon l'une des revendications 4 à 5, dans lequel les flancs (32a) et (32b) sur le rail longitudinal définissent entre eux une gorge de vissage (32c), et les flancs (34a) et (34b) sur le rail transversal définissent entre eux une gorge de vissage (34c), et dans lequel lesdites gorges de vissage (32c, 34c) adaptée pour recevoir une vis (38) adaptée pour fixer les moyens de solidarisation (36) au rail longitudinal (18) ou au transversal (20).

7. Dispositif selon la revendication 6, dans lequel les moyens de solidarisation (36) présentent une partie de guidage (361) permettant de centrer la vis (38) en direction de la gorge de vissage (32c, 34c) d'un rail.

8. Dispositif selon la revendication 7, dans lequel les moyens de solidarisation (36) présentent une cavité fraisée dans laquelle la tête de vis (38) est insérée.

9. Dispositif selon l'une des revendications précédentes, comportant une barre de gouttière (30) adaptée pour être fixée sur un bord inférieur d'un panneau solaire (12) et adaptée pour être fixée par vissage à l'extrémité du rail longitudinal (18).

10. Dispositif selon l'une des revendications précédentes, dans lequel deux rails longitudinaux (18) consécutifs sont reliés entre eux au moyen d'une éclisse (42) sur laquelle ils sont susceptibles d'être vissés.

11. Dispositif selon la revendication 10, dans lequel le rail longitudinal (18) est muni de renforts (18c) et (18d) adaptés pour recevoir une vis 44 qui maintient en position l'éclisse (42) au rail longitudinaux (18).

12. Dispositif selon la revendication 11, dans lequel la somme de la distance entre le perçage et l'extrémité du premier rail longitudinal (18) et la distance entre le perçage et l'extrémité du deuxième rail longitudinal (18) est supérieure à la distance de l'entraxe de deux perçages de l'éclisse (42) destinée à recevoir la vis (44).

13. Dispositif selon l'une des revendications précédentes, dans lequel une patte de renfort (46) est fixée sous la face du dessous d'un rail transversal (20), ladite patte de renfort étant adaptée pour coopérer avec une face inférieure de l'aile de support (26a, 26b) d'un rail longitudinal (18).

14. Dispositif selon l'une des revendications précédentes, dans lequel les rails longitudinaux sont adaptés à être fixés solidairement à la charpente (16), sensiblement au milieu du rail longitudinal, et sont maintenus entre le point de fixation solidaire et les extrémités par des crochets de fixation (22) permettant la déformation du rail selon la direction longitudinale due aux variations de température.

15. Dispositif selon l'une des revendications précédentes, dans lequel un rail, l'aile d'appui d'un rail (24a, 24b, 28a, 28b) et / ou l'aile de support d'un rail (26a, 26b) définissent des gouttières d'écoulement de l'eau.

16. Procédé de montage d'un dispositif selon l'une des revendications précédentes, dispositif adapté pour la fixation de panneaux solaires sur une charpente d'une toiture définissant un plan de toiture, le procédé étant **caractérisé en ce qu'**il comprend les étapes de :
(a) fixation des rails longitudinaux (18) sur la charpente (16),
(b) positionnement d'un panneau solaire (12),
(c) mise en place du rail transversal (20) au-dessus du panneau solaire (12), et mise en appui du panneau (12) sur la face supérieure (241a, 241b) de l'aile d'appui de chaque rail longitudinal et sur la face supérieure (281a, 281b) de l'aile d'appui du rail longitudinal,
les étapes (b) et (c) étant répétées pour chaque panneau solaire (12),
(d) mise en place des joints d'étanchéité (40) sur chaque rail longitudinal et chaque rail transversal,
(e) mise en place des moyens de solidarisation (36),
(f) fixation des moyens de solidarisation sur les rails longitudinaux (18) et transversaux (20).

## Patentansprüche

1. Vorrichtung, die für die Befestigung von Solarpaneelen (12) an einem Dachgebälk (16) geeignet ist, das eine Ebene des Daches definiert, wobei die Vorrichtung umfasst:
- mindestens zwei parallele Längsschienen (18), die jede ein unteres Ende (18b) und ein oberes Ende (18a) umfassen, wobei jede Längsschiene (18) mindestens einen Auflageschenkel (24a, 24b) umfasst, der eine obere Seite (241a, 241b) aufweist, die dazu geeignet ist, im Wesentlichen zur Ebene des Daches parallel zu sein, und dafür geeignet ist, eine Längskante eines Solarpaneels (12) in Auflage aufzunehmen, wobei jede Längsschiene ebenfalls einen Stützschenkel (26a, 26b) umfasst, der unterhalb der ersten Auflageebene angeordnet ist und von dem eine obere Seite (261a, 261b) eine Stützebene definiert, wobei jede Längsschiene ebenfalls zwei Flanken (32a, 32b) umfasst, die sich entlang der Längsschiene in einer Ebene senkrecht zum Auflageschenkel der Längsschiene und über den Auflageschenkel der Längsschiene hinaus erstrecken, wobei die Flanke der Längsschiene dafür geeignet ist, ein Paneel in Bewegung in der Querrichtung zu begrenzen,
- mindestens eine Querschiene (20), die sich zwischen zwei Längsschienen (18) und senkrecht zu den Längsschienen erstreckt, wobei die Querschiene (20) mindestens einen Auflageschenkel (28a, 28b) aufweist, der eine obere Seite (281a, 281b) umfasst, die dafür geeignet ist, eine Querkante eines Solarpaneels in Auflage aufzunehmen, und eine untere Seite (282a, 282b), die zwei Enden umfasst, wobei jedes Ende der unteren Seite (282a, 282b) des Auflageschenkels der Querschiene dafür geeignet ist, an der oberen Seite (261a, 261b) des Stützschenkels (26a, 26b) einer Längsschiene (18) in Auflage zu gehen, wobei die Querschiene ebenfalls zwei Flanken (34a, 34b) umfasst, die sich entlang der Querschiene in einer Ebene senkrecht zum Auflageschenkel der Querschiene und über den Auflageschenkel der Querschiene hinaus erstrecken, wobei die Flanken der Querschiene dafür geeignet sind, ein Paneel in der Bewegung in Längsrichtung zu begrenzen,
- ein Verbindungsmittel (36), das dafür geeignet ist, mit den Flanken einer Längsschiene zusammenzuwirken, um das Paneel in der Querrichtung und in einer Richtung senkrecht zu einer Hauptebene des Paneels zu arretieren, und/oder dafür, mit den Flanken der Querschiene zusammenzuwirken, um das Paneel in der Längsrichtung und in der Richtung senkrecht zur Hauptebene des Paneels zu arretieren,
- ein Dichtungsmittel, das zwischen dem Verbindungsmittel (36) und den oberen Seiten der Solarpaneele (12) angeordnet ist,
**dadurch gekennzeichnet, dass** das Dichtungsmittel eine Dichtung (40) für jede Längsschiene und für jede Querschiene ist, wobei jede Dichtung (40) im Querschnitt verformbar ist zwischen einer im Wesentlichen ebenen Ausgangsstellung und einer Gebrauchsstellung, in der sie eine im Wesentlichen U-förmige Form aufweist, mit oberen Kanten (40a, 40b), die mit den oberen Seiten von zwei benachbarten Paneelen (12) in Berührung gehen, wobei die oberen Kanten (40a) und (40b) eine Materialzugabe umfassen, wobei die Dichtung (40) mit einem Materialabtrag unterhalb des unteren Endes der U-förmigen Faltung ausgeführt ist.

2. Vorrichtung nach Anspruch 1, wobei:
- jedes Ende der unteren Seite (282a, 282b) des Auflageschenkels der Querschiene dafür geeignet ist, an der oberen Seite (261a, 261b) des Stützschenkels (26a, 26b) einer Längsschiene (18) in Auflage zu gehen, wenn sich die Vorrichtung in einer Montagestellung befindet, in der die Schienen und die Paneele eingebaut werden, und
- die obere Seite (281a, 281b) des Auflageschenkels der Querschiene dafür geeignet ist, eine Querkante eines Solarpaneels in Auflage aufzunehmen, wenn sich die Vorrichtung in einer montierten Stellung befindet, in der die Schienen und die Paneele fest aneinander befestigt sind.

3. Vorrichtung nach einem der vorstehenden Ansprüche, wobei das Verbindungsmittel (36) eine Glasleiste für jede Längsschiene (18) und jede Querschiene (20) umfasst, wobei jede Glasleiste einen im Wesentlichen T-förmigen Querschnitt aufweist, wobei zwei Schenkel des T (36a, 36b) dafür geeignet sind, mit einer oberen Seite von zwei benachbarten Paneelen (12) in Berührung zu gehen, und ein unterer Teil des T dafür geeignet ist, an die Längs- oder Querschiene geschraubt zu werden.

4. Vorrichtung nach einem der vorstehenden Ansprüche, wobei die Längsschiene zwei Längsflanken (32a, 32b) umfasst, die in Bezug auf eine zu den zwei Flanken parallele Symmetrieebene zueinander symmetrisch sind und sich zwischen den zwei Flanken (32a, 32b) erstrecken, zwei Auflageschenkel (24a, 24b), die in Bezug auf die Symmetrieebene der Längsschiene symmetrisch sind, und zwei Stützschenkel (26a, 26b), die in Bezug auf die Symmetrieebene der Längsschiene symmetrisch sind.

5. Vorrichtung nach einem der vorstehenden Ansprüche, wobei die Querschiene zwei Flanken (34a, 34b) umfasst, die in Bezug auf eine zu den zwei Flanken parallele Symmetrieebene zueinander symmetrisch sind und sich zwischen den zwei Flanken erstrecken, und zwei Auflageschenkel (28a, 28b), die in Bezug auf die Symmetrieebene der Querschiene symmetrisch sind.

6. Vorrichtung nach einem der Ansprüche 4 bis 5, wobei die Flanken (32a) und (32b) an der Längsschiene zwischen sich eine Schraubkehle (32c) definieren, und die Flanken (34a) und (34b) an der Querschiene zwischen sich eine Schraubkehle (34c) definieren, und wobei die Schraubkehlen (32c, 34c) dafür geeignet sind, eine Schraube (38) aufzunehmen, die dafür geeignet ist, die Verbindungsmittel (36) an der Längs- (18) oder an der Querschiene (20) zu befestigen.

7. Vorrichtung nach Anspruch 6, wobei die Verbindungsmittel (36) einen Führungsteil (361) aufweisen, der es ermöglicht, die Schraube (38) in Richtung der Schraubkehle (32c, 34c) einer Schiene zu zentrieren.

8. Vorrichtung nach Anspruch 7, wobei die Verbindungsmittel (36) eine eingesenkte Vertiefung aufweisen, in die der Schraubenkopf (38) eingefügt wird.

9. Vorrichtung nach einem der vorstehenden Ansprüche, die eine Rinnenleiste (30) umfasst, die dafür geeignet ist, an einer unteren Kante eines Solarpaneels (12) befestigt zu werden, und dafür geeignet ist, durch Schrauben am Ende der Längsschiene (18) befestigt zu werden.

10. Vorrichtung nach einem der vorstehenden Ansprüche, wobei zwei aufeinanderfolgende Längsschienen (18) mittels einer Lasche (42), an der sie angeschraubt werden können, miteinander verbunden werden.

11. Vorrichtung nach Anspruch 10, wobei die Längsschiene (18) mit Verstärkungen (18c) und (18d) ausgestattet ist, die dafür geeignet sind, eine Schraube 44 aufzunehmen, die die Lasche (42) an der Längsschiene (18) in Position hält.

12. Vorrichtung nach Anspruch 11, wobei die Summe aus dem Abstand zwischen der Bohrung und dem Ende der ersten Längsschiene (18) und dem Abstand zwischen der Bohrung und dem Ende der zweiten Längsschiene (18) größer ist als der Abstand der Mittenachse von zwei Bohrungen der Lasche (42), die dazu bestimmt ist, die Schraube (44) aufzunehmen.

13. Vorrichtung nach einem der vorstehenden Ansprüche, wobei eine Verstärkungsklaue (46) unter der Unterseite einer Querschiene (20) befestigt ist, wobei die Verstärkungsklaue dafür geeignet ist, mit einer unteren Seite des Stützschenkels (26a, 26b) einer Längsschiene (18) zusammenzuwirken.

14. Vorrichtung nach einem der vorstehenden Ansprüche, wobei die Längsschienen dazu geeignet sind, im Wesentlichen in der Mitte der Längsschiene fest am Gebälk (16) befestigt zu werden, und zwischen dem festen Befestigungspunkt und den Enden von Befestigungsklammern (22) gehalten werden, die die durch die Temperaturschwankungen bedingte Verformung der Schiene in der Längsrichtung ermöglichen.

15. Vorrichtung nach einem der vorstehenden Ansprüche, wobei eine Schiene, der Auflageschenkel einer Schiene (24a, 24b, 28a, 28b) und/oder der Stützschenkel einer Schiene (26a, 26b) Ablaufrinnen für das Wasser definieren.

16. Verfahren zum Montieren einer Vorrichtung nach einem der vorstehenden Ansprüche, Vorrichtung, die für die Befestigung von Solarpaneelen an einem Gebälk eines Daches geeignet ist, das eine Dachebene definiert, wobei das Verfahren **dadurch gekennzeichnet ist, dass** es die Schritte umfasst des:
(a) Befestigens der Längsschienen (18) am Gebälk (16),
(b) Positionierens eines Solarpaneels (12),
(c) Einbauens der Querschiene (20) oberhalb des Solarpaneels (12) und Auflegens des Paneels (12) auf die obere Seite (241a, 241b) des Auflageschenkels jeder Längsschiene und auf die obere Seite (281a, 281b) des Auflageschenkels der Längsschiene,
wobei die Schritte (b) und (c) für jedes Solarpaneel (12) wiederholt werden,
(d) Einbauens der Dichtungen (40) an jeder Längsschiene und jeder Querschiene,
(e) Einbauens der Verbindungsmittel (36),
(f) Befestigens der Verbindungsmittel an den Längs- (18) und Querschienen (20).

## Claims

1. Device suitable for attaching solar panels (12) onto a roof framework (16) defining a roof surface, said device including:
- at least two parallel longitudinal rails (18) each comprising a lower end (18b) and an upper end (18a), each longitudinal rail (18) including at least one bearing wing (24a, 24b) having an upper face (241a, 241b) suitable for being substantially parallel with the roof surface and suitable for receiving bearing of a longitudinal edge of a solar panel (12), each longitudinal rail also including a support wing (26a, 26b) arranged below the first bearing surface and wherein an upper face (261a, 261b) defines a support surface, each longitudinal rail also comprising two flanks (32a, 32b) extending along the longitudinal rail in a perpendicular plane to the bearing wing of the longitudinal rail and beyond the bearing wing of the longitudinal rail, the flank of the longitudinal rail being suitable for restricting a panel in movement in the transversal direction,
- at least one transversal rail (20) extending between two longitudinal rails (18) and perpendicularly to said longitudinal rails, the transversal rail (20) having at least one bearing wing (28a, 28b) including an upper face (281a, 281b) and suitable for receiving bearing of a transversal edge of a solar panel, and a lower face (282a, 282b) comprising two ends, each end of the lower face (282a, 282b) of the bearing wing of the transversal rail being suitable for bearing on the upper face (261a, 261b) of the support wing (26a, 26b) of a longitudinal rail (18), the transversal rail also comprising two flanks (34a, 34b) extending along the transversal rail in a perpendicular plane to the bearing wing of the transversal rail and beyond the bearing wing of the transversal rail, the flanks of the transversal rail being suitable for restricting a panel in movement in the longitudinal direction,
- a securing means (36) suitable for engaging with the flanks of a longitudinal rail to block the panel in the transversal direction and in a direction perpendicular to a principal plane of the panel and/or to engage with the flanks of the transversal rail to block the panel in the longitudinal direction and in the direction perpendicular to the principal plane of the panel
- a sealing means arranged between the securing means (36) and the upper faces of the solar panels (12), **characterised in that** said sealing means is a seal (40) for each longitudinal rail and for each transversal rail, each seal (40) being deformable in cross-section between an initial substantially planar position and a use position wherein it has a substantially U shape, with upper edges (40a, 40b) coming into contact with the upper faces of two adjacent panels (12), the upper edges (40a) and (40b) including an addition of material, the seal (40) being produced with a removal of material below the lower end of the U-shaped bend.

2. Device according to claim 1, wherein:
- each end of the lower face (282a, 282b) of the bearing wing of the transversal rail is suitable for bearing on the upper face (261a, 261b) of the support wing (26a, 26b) of a longitudinal rail (18) when the device is in an assembly position wherein the rails and the panels are positioned, and
- the upper face (281a, 281b) of the bearing wing of the transversal rail is suitable for receiving bearing of a transversal edge of a solar panel, when the device is in an assembled position wherein the rails and the panels are attached securely to one another.

3. Device according to one of the preceding claims wherein the securing means (36) comprises beading for each longitudinal rail (18) and each transversal rail (20), each beading having substantially a T-shaped cross-section, two wings of the T (36a, 36b) being suitable for coming into contact with an upper face of two adjacent panels (12) and a lower part of the T being suitable for being screwed onto the longitudinal or transversal rail.

4. Device according to one of the preceding claims wherein the longitudinal rail comprises two mutually symmetrical longitudinal flanks (32a, 32b) with respect to a plane of symmetry parallel with the two flanks and extending between the two flanks (32a, 32b), two symmetrical bearing wings (24a, 24b) with respect to the plane of symmetry of the longitudinal rail, and two symmetrical support wings (26a, 26b) with respect to the plane of symmetry of the longitudinal rail.

5. Device according to one of the preceding claims wherein the transversal rail comprises two mutually symmetrical flanks (34a, 34b) with respect to a plane of symmetry parallel with the two flanks and extending between the two flanks, and two symmetrical bearing wings (28a, 28b) with respect to the plane of symmetry of the transversal rail.

6. Device according to one of claims 4 to 5, wherein the flanks (32a) and (32b) on the longitudinal rail define therebetween a screwing recess (32c), and the flanks (34a) and (34b) on the transversal rail define therebetween a screwing recess (34c), and wherein said screwing recesses (32c, 34c) suitable for receiving a screw (38) suitable for attaching the securing means (36) to the longitudinal rail (18) or to the transversal rail (20).

7. Device according to claim 6, wherein the securing means (36) have a guiding portion (361) for centring the screws (38) in the direction of the screwing recess (32c, 34c) of a rail.

8. Device according to claim 7, wherein the securing means have a milled cavity wherein the screw head (38) is inserted.

9. Device according to one of the preceding claims, including a gutter (30) suitable for being attached to a lower edge of a solar panel (12) and suitable for being attached by screwing to the end of the longitudinal rail (18).

10. Device according to one of the preceding claims, wherein two consecutive longitudinal rails (18) are interconnected by means of a fishplate (42) whereon they are suitable for being screwed.

11. Device according to claim 10, wherein the longitudinal rail (18) is equipped with reinforcements (18c) and (18d) suitable for receiving a screw 44 holding the fishplate (42) in position at the longitudinal rail (18).

12. Device according to claim 11, wherein the sum of the distance between the hole and the end of the first longitudinal rail (18) and the distance between the hole and the end of the second longitudinal rail (18) is greater than the centre-to-centre distance of two holes of the fishplate (42) intended to receive the screw (44).

13. Device according to one of the preceding claims, wherein a reinforcing lug (46) is attached below the bottom face of a transversal rail (20), said reinforcing lug being suitable for engaging with a lower face of the support wing (26a, 26b) of a longitudinal rail (18).

14. Device according to one of the preceding claims, wherein the longitudinal rails are suitable for being attached securely to the framework (16), substantially in the middle of the longitudinal rail, and are held between the secure attachment points and the ends by attachment hooks (22) enabling the deformation of the rail in the longitudinal direction due to temperature variations.

15. Device according to one of the preceding claims, wherein a rail, the bearing wing of a rail (24a, 24b, 28a, 28b) and/or the support wing of a rail (26a, 26b) define water runoff gutters.

16. Method for assembling a device according to one of the preceding claims, device suitable for attaching solar panels on a roof framework defining a roof surface, the method being **characterised in that** it comprises steps of:
(a) attaching the longitudinal rails (18) to the framework (16),
(b) positioning a solar panel (12),
(c) positioning the transversal rail (20) above the solar panel (12), and bearing the panel (12) on the upper face (241a, 241b) of the bearing wing of each longitudinal rail and on the upper face (281a, 281b) of the bearing wing of the longitudinal rail,
steps (b) and (c) being repeated for each solar panel (12),
(d) positioning the seals (40) on each longitudinal rail and each transversal rail,
(e) positioning the securing means (36),
(f) attaching the securing means to the longitudinal (18) and transversal (20) rails.
